(19) **Europäisches Patentamt / European Patent Office / Office européen des brevets**

(11) **EP 1 834 371 B1**

(12) **EUROPEAN PATENT SPECIFICATION**

(45) Date of publication and mention
of the grant of the patent:
**28.07.2010 Bulletin 2010/30**

(21) Application number: **05700692.6**

(22) Date of filing: **04.01.2005**

(51) Int Cl.:
*H01M 8/04* (2006.01)   *H01M 8/14* (2006.01)

(86) International application number:
**PCT/EP2005/000028**

(87) International publication number:
**WO 2006/072262 (13.07.2006 Gazette 2006/28)**

(54) **METHOD AND SYSTEM OF OPERATING MOLTEN CARBONATE FUEL CELLS**

VERFAHREN UND SYSTEM ZUM BETRIEB VON SCHMELZKOHLENSTOFF-BRENNSTOFFZELLEN

PROCEDE ET SYSTEME DESTINES A FAIRE FONCTIONNER DES PILES A COMBUSTIBLE A CARBONATES FONDUS

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**19.09.2007 Bulletin 2007/38**

(73) Proprietor: **Ansaldo Fuel Cells S.p.A.**
**16152 Genova (IT)**

(72) Inventors:
- **PARODI, Filippo**
  **I-16036 Recco(GE) (IT)**
- **BOSIO, Barbara**
  **I-16137 Genova(GE) (IT)**
- **ARATO, Elisabetta**
  **I-16136 Genova(GE) (IT)**

(74) Representative: **Di Sciuva, Michele**
**Studio Torta S.r.l.**
**Via Viotti, 9**
**10121 Torino (IT)**

(56) References cited:
**EP-A- 0 430 017**    **US-A- 4 810 595**
**US-A1- 2003 228 506**    **US-A1- 2004 219 398**

- **LARMINIE, DICKS: "Fuel Cell Systems Explained" 2003, WILEY , WEST SUSSEX P019 8SQ ENGLAND , XP002340139 page 187 - page 207**
- **FUMIHINKO YOSHIBA, YOSHIYUKI IZAKI, TAKAO WATANABE: "Wide range load controllable MCFC cycle with pressure swing operation" JOURNAL OF POWER SOURCES, no. 137, 4 August 2004 (2004-08-04), pages 196-205, XP002339763**
- **B. BOSIO, E. ARATO, P. COSTA: "Concentration polarisation in heterogeneous electrochemical reactions: a consistent kinetic evaluation and its application to molten carbonate fuel cells" JOURNAL OF POWER SOURCES, no. 115, 2003, pages 189-193, XP002339764**

**Description**

**Field of the Invention**

The present invention relates to fuel cells using molten carbonates as electrolyte, and, more particularly, to molten carbonate fuel cells where critical operating conditions, which can penalise electrochemical performance or cause material deterioration, are avoided by means of a proper design and operating optimisation, thereby improving their reliability.

**Prior Art**

A fuel cell is a power generating apparatus for converting chemical energy into electrical energy using electrochemical reactions, and is highlighted as a new promising electrical energy source because it is an environmental friendly apparatus and has a high power-generating efficiency. A fuel cell has the characteristic of continuously generating power by supplying fuel through an oxidation reaction of hydrogen and a reduction reaction of oxygen in the air. Different kinds of fuel cells are under development at the moment. In particular, the technology of molten carbonate fuel cells (MCFCs) is now at the stage of scale up to commercialization and many developers have shown significant progress.

A molten carbonate fuel cell as distinct from other fuel cells utilizes molten carbonates as electrolyte, so that the operation is carried out at a high temperature of about 650˚C and the speed of the electrochemical reactions is quicker.

MFCs are planar cells formed by a matrix filled with carbonates and coupled with two electrodes where the following reactions occur:

$$
\begin{array}{lll}
CO_2 + \tfrac{1}{2}\,O_2 + 2e^- \rightarrow CO_3^{--} & \text{(cathode)} & \text{reaction 1} \\
H_2 + CO_3^{--} \rightarrow H_2O + CO_2 + 2e^- & \text{(anode)} & \text{reaction 2} \\
\hline
H_2 + \tfrac{1}{2}\,O_2 \rightarrow H_2O + \text{heat} + \text{electric energy} & \text{(total)} &
\end{array}
$$

In addition, shifting reaction occurs on the anodic side:

$$CO + H_2O \leftrightarrow CO_2 + H_2. \qquad \text{reaction 3}$$

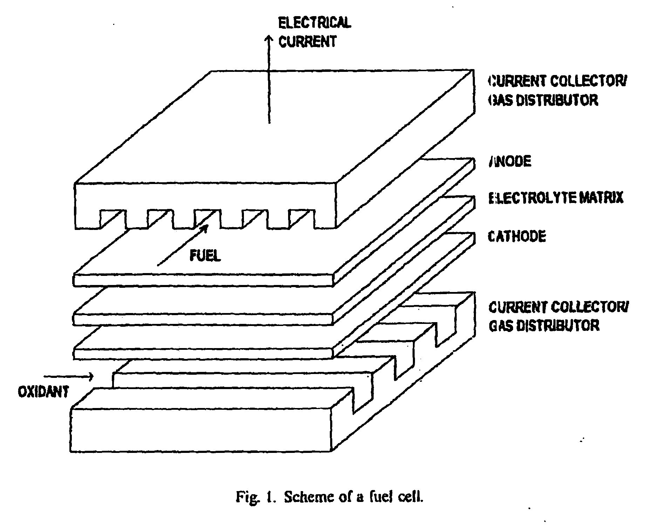

The fuel and the oxidant gas are fed separately, and the ceramic matrix prevents gas crossover and guarantees an adequate ionic conduction and electronic insulation. Fig. 1 shows the main components that form a single cell.

Unlike a low-temperature fuel cell, electrode reactions occur when the carbonate electrolyte is molten at a high temperature. For this reason, the oxidation-reduction reactions do not require an expensive noble catalyst, which usually is also very sensitive to poisons, so that a feature of MCFCs is the ability to use a wider range of fuels such as mixture also containing significant amount of carbon monoxide, coal gas, and fuel derived from biomass gasification.

Another feature is to anticipate a high efficiency above about 80% due to the utilization of electricity and waste heat.

The molten carbonate fuel cell has porous anode/cathode electrodes having a wide surface area for facilitating the smooth procedure of the oxidation-reduction reactions of hydrogen and oxygen. The molten carbonate impregnated in a porous ceramic placed between the porous anode/cathode electrodes functions as a shield preventing direct contact between the fuel consisting mainly of hydrogen and the oxidant consisting of oxygen and carbon dioxide, and a passage for guiding carbonate ions ($CO_3^-$) produced from the cathodic electrode to the anodic one.

A single cell forming the unit cell generates a low electromotive force of about 1 V, and is of no practical use. Such unit cells are stacked, with conductive separator plates placed between two adjacent unit cells, to constitute the power generating system. Specifically, the unit cell includes a pair of porous electrode plates, and an electrolyte plate consisting of alkali carbonate placed between these electrode plates. The separator plates electrically connect these unit cells, and provide the anodic electrode with a passage of a fuel gas and the cathodic electrode with a passage of an oxidant gas.

These stacked fuel cells require manifolds for distributing and collecting the reaction gases. The gases required for the reactions are supplied via inlet manifolds, and after passing through the electrodes, are discharged via outlet manifolds opposite the inlet manifolds. Each unit cell is provided with a wet seal formed by molten carbonates, in order to prevent the fuel and the oxidant from being mixed within the fuel cell. The body of the stacked fuel cells and the manifolds are also sealed together in order to prevent the reaction gases from leaking out.

In the case of the fuel cells, however, part of the energy contained in the fuel is converted into electrical energy, and the remainder is converted into heat. Accordingly, in the case of the stacked fuel cells, the thermal value varies according to the number of cells in the stack. The more the fuel cells are stacked, the more the thermal value is generated.

Usually, a hot section is produced at the outlet of the gas.

This high temperature has an influence on the components of the fuel cell, i.e., the electrodes, the electrolyte and the separator plates. Specifically, there are some situations: change of the porous structure and evaporation of the liquid electrolyte, which are due to the high temperature; consumption of the electrolyte and deterioration of the separator plates, which are due to the increased corrosion of the metal separator plate; and leakage of the fuel gas, due to these causes. Therefore, the lifetime of the fuel cell is significantly reduced.

In order to suppress the production of the hot section, a method is widely used to cool it by overly supplying the oxidant gas mainly comprising air. The oversupply of air at the defined passage causes the pressure drops to be increased. The conventional molten carbonate fuel cell isolates the fuel from the oxidant gas by use of the electrolyte impregnated in the porous matrices. However, since the oversupply of the oxidant for suppressing the production of the hot section causes an overpressure within the cathodic passage, the oxidant gas can leak out due to the rupture of the wet seal or cross the matrices, thereby significantly shortening the life of the fuel cell body.

The working temperature also depends on the intensity of current generated. This is chosen as a compromise between high current-high specific power and low current-low specific power (which leads to lower temperatures).

With high current values or when high fraction of the fuel is consumed by electrochemical reactions (the so-called "fuel utilisation factor") some problems may also occur. They are directly linked to the working conditions inside the electrodes that falls in the diffusion control regime, which causes a lowering of the cell performance.

Performance optimisation assumes particular importance in the case of molten carbonate fuel cells, in the highlighting of possible critical working conditions and the consequent choice of project features and operating conditions. Furthermore, this also suggests the development of a method for the optimisation of the process parameters, which allows operation at the highest efficiency in relation to the cell dimensions and number of elements forming the stack.

According to the state of the art, this necessity has been fulfilled by inserting inside the fuel cell particular sensors which determine the operating parameters and thus allow their adjustment. This does not ensure that in ranges which are far from those being measured the optimal conditions can be reached. Furthermore, not all the useful variables can be measured experimentally like for example the local current density. This kind of solution has the disadvantage of being very expensive, since it involves the installation of a certain number of sensors and measurement devices inside the cell elements and expensive data acquisition systems to manage the data. Additionally, considering the critical working conditions, those elements must be particularly accurate in order to ensure a continuous and secure functioning.

As an alternative to the experimental measurements, the use of commercial codes for the calculation and the simulation of the working conditions for a fuel cell might be considered. For example, as disclosed in US 4810595. Unfortunately available commercial codes are limited by the degree of detail of the model, which has to take into consideration the various processes involved, and also by the calculation limits of the system itself when giving a solution to the model in real time.

Disclosure of the invention

For these reasons, the present invention discloses a method, which allows verification of the chemical, physical and electrical conditions of every cell either in the design or in the working phase, based on the MCFC reference parameters and a detailed simulation model implemented by a calculation code. An automatic analysis method of the results obtained allows, starting from operative inputs, the optimisation of the project features and of the working conditions.

In particular, the reference parameters of the MCFC are internal resistance, polarisation resistance of the electrodes, concentration polarisation, open-circuit voltage and cross-over rates, while the simulation model uses a three-dimensional scheme based on local balances of mass, energy and momentum. By means of this model, it is possible to evaluate the average voltage or the current map relative to the cells, the thermal map of the solid, of the anodic and cathodic gases, the maps of composition and flow-rates of those gases and the value of the main parameters characterising the cell performance.

The settable operative conditions are the compositions, the flow-rates, the temperature and the pressure of the feeding gases, the average current density (or the cell voltage), the area, the number and the geometry of the cells. Those variables are defined on the basis of the expected cell performance and with respect to the maximum acceptable values for the following parameters: local solid temperature, pressure drop in the gas path channels, pressure difference in the anodic and cathodic compartments and current density/limiting current density ratio. This is obtained by means of a method set out in claim 1. Preferred embodiments of the methods are defined in the dependent claims 2 to 7. According to another embodiment it is disclosed a computer-readable medium encoded with a computer code for directing a computer processor according to claim 8, preferred embodiments are defined in dependent claim 9-11.

**Figures**

Fig. 1 - Scheme of a fuel cell.
Fig. 2 - Modelling scheme of an MCFC stack.
Fig. 3 - Flowchart for the calculation of the main features of each cell and the main iterative cycle for the temperature convergence of the different cells.
Fig. 4 - Simplified flowchart of the calculation program MCFC-D3S$^©$ for a single cell (if average current density is fixed and co or cross-flow feeding is assumed).
Fig. 5 - Simplified flowchart of the calculation program MCFC-D3S for a sub-cell (if average current density is fixed and co or cross-flow feeding is assumed).
Fig. 6: Map of the solid temperature calculated for a square stack fed by reformed natural gas [K].
Fig. 7: Map of the cathodic pressure drop for a square stack fed by reformed natural gas [mbar].
Fig. 8: Optimised map of the solid temperature calculated for a rectangular stack fed by reformed natural gas [K].
Fig. 9: Optimised map of the cathodic pressure drop calculated for a rectangular stack fed by reformed natural gas [K].
Fig. 10: Temperature map on the surface of a cell with co-flow feeding.
Fig. 11: Measured and calculated cell potentials (the potential of the central cells calculated without cross-over is about 692 mV)
Fig. 12: Measured and calculated cell temperatures (the temperatures of the central cells calculated without cross-over are all in the range 610-640 ˚C)
Fig. 13: Comparison of experimental and simulated data
Fig. 14: Cell voltage response to current density perturbation [mV]
Fig. 15: Cell solid temperature response to current density perturbation [K]
Fig. 16: Flow chart summarising the procedure used by the method

**Detailed description of the invention.**

Molten carbonate fuel cells are reactors which, from an electrochemical point of view, have to be considered innovative since they convert the chemical energy of the fuel fed to the reactor directly into electrical energy. They are also characterised by high yields and low environmental impact. In order to develop a method for the performance optimisation of the MCFC three steps have been used:

1. the evaluation of the experimental values of the MCFC which has to be tested;
2. the evaluation of the local chemical, physical and electrical conditions;

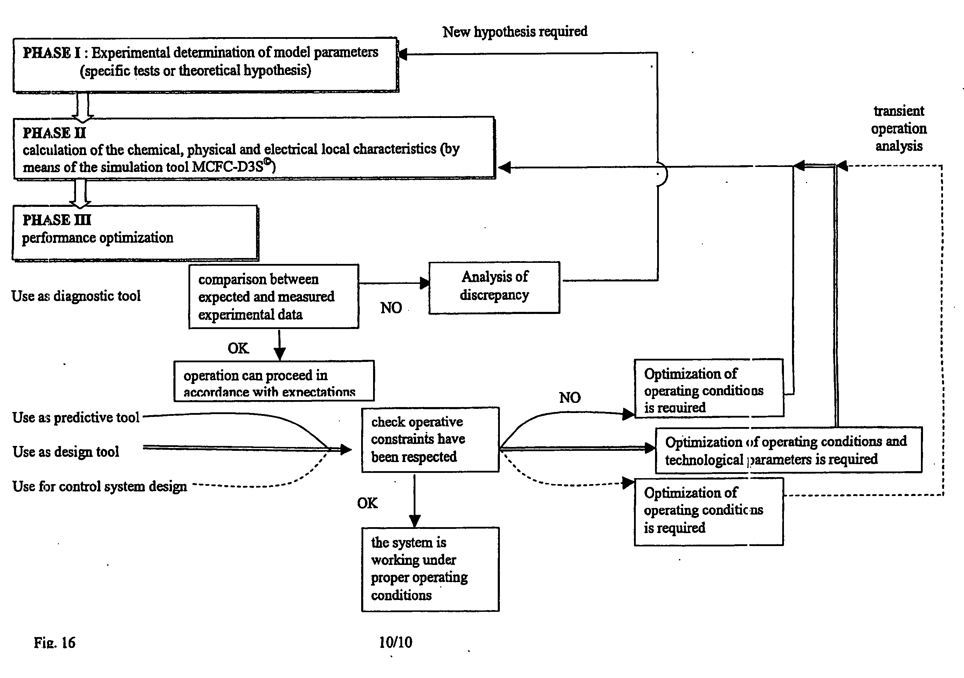

the optimisation of the working conditions based on the results obtained and on specific operating constants.
**The procedure applied by the method is summarised in the flow chart on Fig. 16 and follows the scheme:**

PHASE 1: EVALUATION OF THE EXPERIMENTAL VALUES

The determination of the reference experimental values relating both to the kinetic and the electrochemical characteristics of the cell is carried out on a sample cell having the same constructional properties and undergoing the same storage and working conditions as the stacked cells.
Internal resistance $R_{iR}$: the method of its evaluation is described in patent application W02003EP12590. The measurements are taken after the cell has completed the initial conditioning cycle and are repeated at 600, 625, 650, 675 e 700˚C.
The results obtained are processed mathematically in order to identify the value of the coefficients $c_{ir}$ (ohmic resistance of the contacts) and D (electrolite contribution) in the following equation:

$$R_{iR} = c_{iR} + D \cdot e^{G/T}$$

where T = temperature [˚K], $C_{ir}$, D and G represent empirical parameters, typically 0.3 $\Omega cm^2 < C_{ir} < 0.8$ $\Omega cm^2$ and 5 $10^{-5}$ $\Omega cm^2 < D < 5$ $10^{-4}$ $\Omega cm^2$ and D = 6596 ˚K.
Polarisation resistance of the electrodes $R_{\eta electrode}$: a characteristic potential/current curve at constant feed flow-rate and temperature is constructed.

From the slope of the curve, which corresponds to the polarisation of the electrodes, the coefficient A in the following semi-empirical expression is deduced:

$$R_{\eta electrode} = \frac{A e^{B/T}}{p_{O_2}^{\beta_{O2}}}$$

where T = temperature [K], A, B and $\beta_{O2}$ are empirical parameters; typically, A is comprised between $3 \cdot 10^{-6}$ $\Omega cm^2$ $Atm^{\beta O2}$ and $3 \cdot 10^{-7} \Omega cm^2$ $Atm^{\beta O2}$, B = 11400 K and $\beta_{O2}$ = 0.667.

Mass transport coefficient $K_{cr}$: constant feed flow-rate characteristic curves are extrapolated by increasing the working electric current up to the limiting value, where a sharp fall in performance occurs. Under these conditions, the limiting utilisation factor of a single reagent can be identified when the other reagents are fed to great excess. The mass transport coefficient is calculated using

$$K_{Cr} = -\frac{Q_r^0}{L c_r^0} \ln(1 - \frac{u_{r,\lim}}{100})$$

where $Q_r^0$ = molar feeding flow rate for the reagent r per unit of length [mol/cm$^3$ s],
L = cell length [cm] and $u_{r,\lim}$ = utilisation factor-limit of the reagent r [%].

Cross-over: many tests are conducted at different cathode/anode flow-rate ratios by monitoring the output flow-rate in order to estimate a proportionality factor a between the possible flow of gas from one compartment to the other one and the pressure difference between those same compartments. In the project phase the method is applied by using values deriving from previous tests.

PHASE II: EVALUATION OF THE LOCAL CHEMICAL, PHYSICAL AND ELECTRICAL CONDITIONS

The chemical, physical and electrical conditions for each stacked cell are calculated by means of a three-dimensional model based on the following starting hypothesis:

- Every single cell is identified as the superimposition of an anode, a cathode, a matrix two current collectors (anodic and cathodic) and a bipolar plate; the temperature path through this cell-pack is assumed to be constant, so that the temperatures of each single component are undistinguishable;
- The gases flow within the distributors according to a simulated preferential path, as passing through channels with constant transversal sections;
- In the gas flow channels the temperature and speed profiles are completely developed;
- In the transversal sections of the flow channels the gas composition and temperature are uniform;
- From the electrical point of view each cell is assumed as an equi-potential surface;
- The maps (of temperature, current etc.) are calculated by notionally dividing the cell into sub-cells with thermally conductive borders, so as to form a fine grid. The mesh is defined on the input data set;
- In every sub-cell the temperature is assumed to be constant in the horizontal plane and the thermal exchange along the vertical axis between one cell and another one is estimated to be proportional to the temperature difference between corresponding sub-cells of adjacent cells;
- The effect of radiation heat transfer is considered to be negligible;
- The thermal exchanges between adjacent cells and between terminal cells and heating plates are considered only for conductive heat exchange;
- The gas distribution along the vertical axis of the stack is assumed to be uniform;
- Possible extra cathodes or extra anodes at the ends of the stack in order to minimize electrolyte migration through the external manifold gaskets are simulated as electrochemically inactive cells (patent application WO2003EP10589);
- The electrical response of the stack to possible disturbances is considered instantaneous, while the thermal transient is calculated in relation to the thermal capacity of the system.

The theoretical model allows the calculation of the working conditions by steady-state or transient behaviour of single or piled MCFCs taking into consideration mass balances, momentum and energy as explained below. Three MCFC feeding configurations are considered: cross, co and counter-flow.

Mass balance: In the electrodes, the following reactions take place:

$$CO_2 + \tfrac{1}{2} O_2 + 2e^- \rightarrow CO_3^{--} \qquad \text{(cathode)} \quad \text{reaction 1}$$
$$H_2 + CO_3^{--} \rightarrow H_2O + CO_2 + 2e^- \qquad \text{(anode)} \quad \text{reaction 2}$$

$$H_2 + \tfrac{1}{2} O_2 \rightarrow H_2O + \text{heat} + \text{electric energy} \quad \text{(total)}$$

the progression degree of which, allowing the mass balancing between the inlet and the outlet of each cell, is obtained from Faraday's Law. Besides the electrochemical reactions the water gas shift is also allowed for:

$$CO + H_2O \leftrightarrow CO_2 + H_2 \qquad \text{reaction 3}$$

which takes place in the anodic section where the gas composition is calculated by assuming that thermodynamic equilibrium has been reached.

The effect of a possible cross-over is calculated locally for every single cell in relation to the experimental parameter cited in phase I. The presence of cross-over effects involves also the evaluation of the gas composition and temperature in view of the following reactions:

$$H_2 + \tfrac{1}{2} O_2 \rightarrow H_2O \qquad \text{reaction 4}$$

$$CO + \tfrac{1}{2} O_2 \rightarrow CO_2 \qquad \text{reaction 5}$$

These can take place at the anode or at the cathode depending on the cross-over direction. Combustion is assumed to be complete.

The balances are therefore the following:

| Anodic Gas | |
|---|---|
| $$\dfrac{\partial n_i}{\partial x} = r_i \qquad \text{where } r_i = \sum_{j=2}^{5} \nu_{i,j} r_j \text{ and } r_2 = J/n_e F \qquad (6)$$ | |
| Cathodic Gas | |
| $$\dfrac{\partial \bar{n}_i}{\partial y} = r_i \qquad \text{where } r_i = \nu_{i,1} r_1 + \sum_{j=4}^{5} \nu_{i,j} r_j \qquad \text{and } r_1 = r_2 \qquad (7)$$ | |
| Gas cross-over | |
| $$q_{cross-over} = \alpha |p_a - p_c| \qquad (8)$$ | |

Energy balance:

the anodic and cathodic temperature maps are calculated by means of thermal balances for each sub-cell.

They have the following expressions:

| Anodic Gas | |
|---|---|
| $$\sum_i n_i Cp_i \dfrac{\partial T_a}{\partial x} = \sum_i \dfrac{\partial n_i}{\partial x} \int_{T_a}^{T_s} Cp_i dT_a + Sh(T_s - T_a) + Q_{cross-over} \qquad (9)$$ $$\text{if } p_a < p_c \quad Q_{cross-over} = -r_4 \Delta H_4$$ $$\text{else} \qquad Q_{cross-over} = 0$$ | |

(continued)

| Cathodic Gas | |
|---|---|
| | $$\sum_i n_i Cp_i \frac{\partial T_c}{\partial y} = \sum_i \frac{\partial n_i}{\partial y} \int_{T_c}^{T_s} Cp_i dT_c + Sh(T_s - T_c) + Q_{cross-over} \qquad (10)$$ |
| | if $p_a > p_c \qquad Q_{cross-over} = -r_4 \Delta H_4 - r_5 \Delta H_5$ |
| | else $\qquad Q_{cross-over} = 0$ |

This balance takes into consideration both the thermal exchange between solid and gas and the thermal contribution due to the elements taking part in the electrochemical reaction and which, in ordinary working conditions ($T_{sol} > T_{gas}$) causes a lowering of the gas temperature for the elements which leave the gas in order to react in the electrode ($H_2$ at the anode, $O_2$ and $CO_2$ at the cathode) and a temperature increase of the gas associated with the reaction products enriching the gas ($H_2O$ and $CO_2$ at the anode).
In order to evaluate the thermal man of the solid, various different thermal contributions to each sub-cell from the adjacent sub-cells, from the anodic and cathodic gases, from the reactions taking place in the sub-cell itself and from the external environment must be considered.

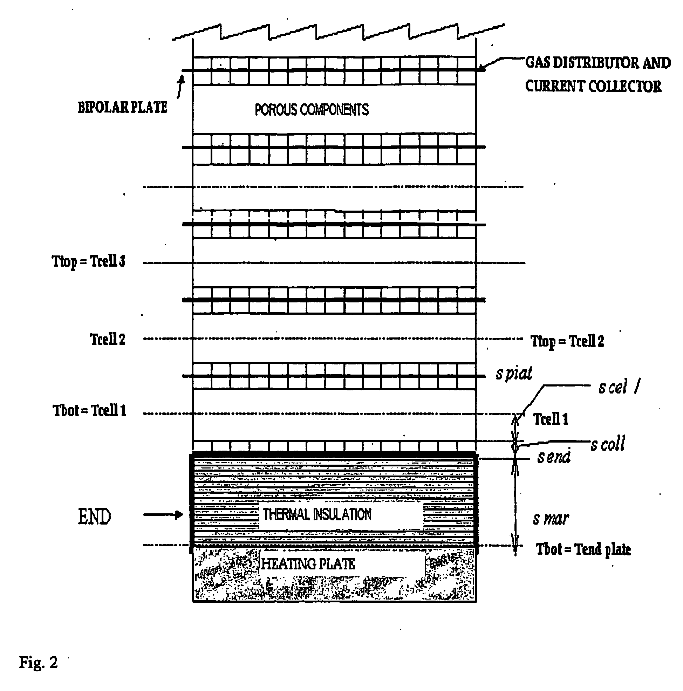

Figure 2 shows a diagram of the stack, which is useful for understanding the model being described with respect to the estimation of the heat exchange along the vertical axis of the stack. Note that the possible presence of terminal heating plates is also allowed for.
The total thermal balance of the solid is as follows:

$$\rho\, C_p\, s\, dT/dt = S_a h_a (T_a - T_s) + S_c h_c (T_c - T_s) + Q_{cond} + Q_{reac} + Q_{stack} \qquad (11)$$

*for the dynamic version*

$$S_a h_a (T_s - T_a) + S_c h_c (T_s - T_c) = Q_{cond} + Q_{reac} \qquad (12)$$

*for the steady-state version*
where

$$Q_{cond} = \sum_n (s_n \lambda_n)\left(\frac{\partial^2 T_s}{\partial x^2} + \frac{\partial^2 T_s}{\partial y^2}\right) \qquad (13)$$

$$Q_{reac} = \sum_{j=1}^{3} r_j \Delta H_j - VJ \qquad (14)$$

$$Q_{condstack} = K_{top}(T_{top} - T_{sol}) + K_{bot}(T_{bot} - T_{sol}) \qquad (15)$$

In the case of an internal cell in the stack:

$T_{top/bot}$ = temperature of the adjacent cell above/below [K]

$$K_{top} = K_{bot} = \left( \frac{scel}{kcel} + \frac{spiat}{kacc} + \frac{2 \cdot hcoll}{kcoll} \right)^{-1} [W / m\ K] \quad \text{thermal resistances in series} \quad (16)$$

In the case of the top cell:

Ttop = temperature of the plate above [K]

Tbot = temperature of the adjacent cell below [K]

$$Ktop = \left( \frac{scel}{2 \cdot kcel} + \frac{sen\ d}{kacc} + \frac{smar}{kmar} + \frac{hcoll}{kcoll} \right)^{-1} [W / m\ K] \quad \text{thermal resistances in series} \quad (17)$$

Kbot =Kbot from (16)

In the case of the bottom cell:

Ttop = temperature of the adjacent cell above [K]
Tbot = temperature of the plate below [K]
Ktop =Ktop from (16)
Kbot =Kbot from (17)

The conductivity of the current collector is considered as a set of thermal resistances in parallel.

$$Kcoll= kacc \cdot scoll \cdot (ncan + 1) \quad [W / m\ K] \quad (18)$$

As said above, it is also possible that extra-cathodes or extra-anodes are present at the ends of the stack (reservoirs) which minimise the electrolyte migration effects along the gasket of the external manifolds (patent application W02003EP10589).
In this case, reservoirs are simulated as cells where electrochemical reactions do not occur, and only thermal effect is taken into account.
Momentum balance:

the gas pressure drops along the cell channels are calculated as:

$$\frac{\partial P_{a/c}}{\partial x_{a/c}} = -K_{a/c} \frac{\mu_{a/c} v_{a/c}}{d^2} \quad (19)$$

The electrochemical performance is calculated iteratively by means of the cell potential as a function of the average current if the latter is given as input data or by calculating the current itself if the potential is given.
The electrochemical kinetics are calculated as follows:

$$V = E - RJ - \eta_{conc} = E - \left( \frac{A e^{B/T}}{p_{O_2}^\beta} + c_{iR} + D \cdot e^{GT} \right) J - \frac{R_g T}{nF} \left[ \ln \left( 1 - \frac{J}{J_{H_2,lim}} \right) + \frac{J}{J_{H_2,lim}} + \ln \left( 1 - \frac{J}{J_{CO_2,lim}} \right) + \frac{J}{J_{CO_2,lim}} \right] \quad (20)$$

where the coefficients $K_{cr}$, A, B, $c_{iR}$, D and G are experimentally identified according to Phase I. As it frequently happens that in the same stack cells having the same structure behave differently, in order to make interpretation of the experimental data easier, the parameters of each cell can be identified in the input.

The calculation code for applying the described theoretical model is MCFC-D3S© and the subsequent updates. It is in Fortran language, has a main program and 19 subroutines and it calculates iteratively several dozen 4D vectors of more than 80 elements.

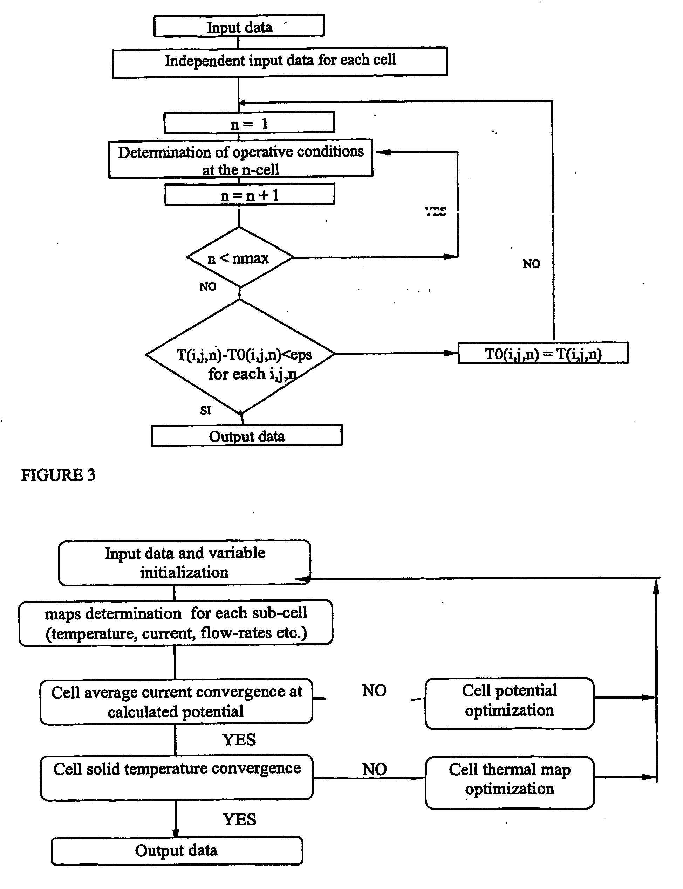

Figure 3 shows the flow chart where the main part relating to the calculation of the main characteristics of each cell and the main iterative cycle for obtaining convergence on the temperature of the different cells can be seen. The symbols are:

nmax = total number of cells (or packs containing a number of cells assumed under the same operating conditions in order to speed up the calculations)
i,j = coordinates indicating the position on the plane of a cell
T(i,j,n) = solid temperature calculated at point i,j of cell n
T0(i,j,n) = inizialization solid temperature at point i,j of cell n
eps = error allowed in solid temperature convergence.

According to one preferred embodiment the invention foresees that the analyzing step comprises subdividing each cell of the fuel cell stack into sub cells; determining the initialization solid temperature and the error allowed in solid temperature convergence; calculating the temperature mapping in each cell of the fuel cells stack by determining for each sub-cell of a fuel cell a first temperature; repeating the routine of calculating the temperature if the difference between the calculated and initialization temperature is above the error allowed in solid temperature convergence, by first setting the initialization temperature equal to the calculated temperature; comparing the produced data with a previously threshold value of temperature to determine the proper dosage of anodic and cathodic gases using a computer code, and further regulating the inlet flow rates of the anodic and/or cathodic gas such that in each element of a cell of the stack the pressure drop between inlet and outlet is below 20 mbar and the temperature is within the operating range.

Alternatively the code can run having the average current density as input value and then calculates the relative potential, or calculates the average current density starting from the potential value.

Accordingly, the code determines a threshold value of the limiting current density and of the cell voltage, calculates the current density mapping in each element of the a cell of the stack and the cell's average current density, compares the produced data with a previously determined threshold value of limiting current density to determine the proper utilisation factor, and regulates the average current density in order to keep the cell voltage above the threshold value.

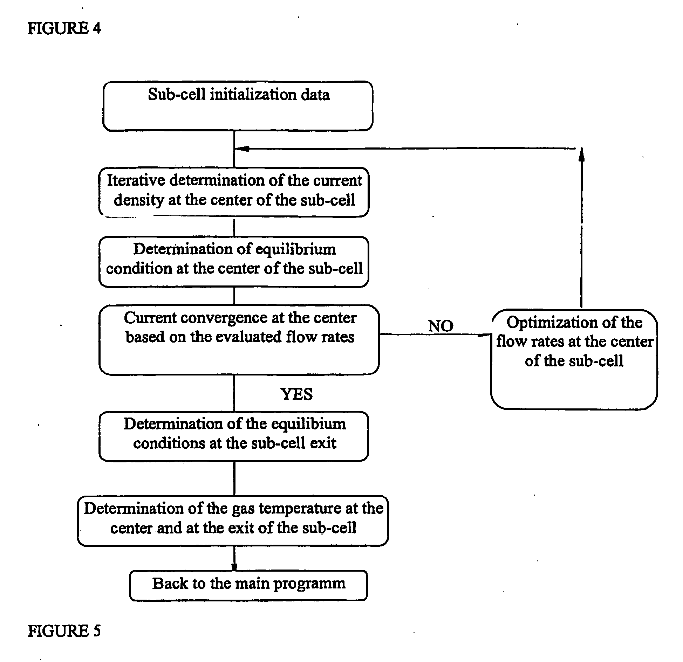

In the flow-chart of figure 4 the calculation starting from the current density is shown.

It is possible to distinguish the main part relating to the calculation of the principal characteristics of each sub-cell and the two principal iterations to obtain the convergence first on the average cell current and then on the thermal map of the cell itself.

As it's foreseen the calculation of the MCFC local operating conditions assuming different feeding solutions, the differential equations of the model related to anodic and cathodic paths are written in the code taking account of the correct flow-rate direction as a function of the chosen option. In the case of counter-flow an additional iteration loop is considered for the inlet conditions of the cathodic gas, allowing the calculation along the anodic direction starting from the cathodic outlet conditions.

The calculation for each sub-cell can be set out as in figure 5. In the option where the cell potential is given as input value the algorithm is considerably simplified by the absence of the convergence loop on the potential.

The calculations requiring to be solved by iterative methods are developed as follows:

- convergence of local current: *predictor corrector* with weighted average;
- convergence of sub-cell current: *predictor corrector*;
- convergence of cell potential: iterative optimisation method (similar to the tangent method);
- convergence on the progression degree for the reactions: Newton-Raphson method;
- convergence solid temperature: Landweber method.
- temperature convergence along the vertical axis of the stack: *predictor corrector*
- convergence of inlet cathodic conditions (only for counter-flow): *predictor corrector* with weighted average.

The thermal regime condition for each cell is calculated at each iteration along the stack as a function of the temperature of the adjacent cells as obtained in the preceding cycle.

The program offers the following calculation options:

- To calculate operating conditions for cross, co or counter-flow feedings;
- To calculate the stationary working conditions or transient operation
- To calculate voltage at fixed current density or current density at fixed voltage;
- To calculate the thermal map of every cell or to consider isothermal cells on the plane.
- To consider in the anodic part only the electrochemical reaction or the electrochemical reaction together with the water gas shift reaction.
- To use constant average values for the specific heat of the gases or to calculate them as a function of the temperature.
- To identify the electrochemical kinetics by means of a global constant resistance or the local resistance described as a function of temperature and gas compositions, with or without taking into consideration the diffusion phenomena.
- To calculate the working condition of each cell or, in order to shorten the running time of the program, to group the cells into different packs of consecutive cells for which the same working conditions are hypothesized and calculated.
- To select the local and/or the global variables to be tracked as a funcion of the time, in the case of dynamic simulation.

INPUT DATA

*Operating conditions*

Anodic and cathodic inlet temperature [K]
Ambient temperature [K]
Anodic and cathodic inlet pressure [atm]
Operating Current Density [A/cm$^2$]
Top and bottom heating plate temperatures [K]
Anodic and cathodic inlet flow rates of each component [Nm$^3$/h]

*Geometric characteristics*

Feeding type (cross, co or counter flow)
Stack cell number
Cell dimensions [cm]
Cell channel number [cm$^{-1}$]
Cell channel height [cm$^{-1}$]
Contact surface gas/solid ratio at anode and cathode
Thickness of porous components, bipolar plates, current collectors, thermal insulation [cm]

*Chemico-physical characteristics*

Heat transfer coefficients [W/cm$^2$K]
Mass transfer coefficients [cm/s]
Thermodynamic equilibrium correction factor for water shift reaction
Nusselt number
Pressure drop coefficients
Gas cross-over rate [Nm3/h mbar]
Conductivity of porous components, bipolar plates, current collectors, thermal insulation [W/cmK]
Kinetics parameters for electrochemical reactions

*Calculation parameters*

Finite difference subdivision number
Calculation options
(i.e. isothermal behaviour, simplified kinetics, diffusion model, no water gas shift reaction)

Maximum iteration number
Tolerances (i.e. current density and solid temperature convergence error)
Heat capacity of stainless steel, alumina, Ni, NiO, $Li_2CO_3$ and $K_2CO_3$ [cal·$K^{-1}$·$mol^{-1}$],
Density of stainless steel, alumina, Ni, NiO, $Li_2CO_3$ and $K_2CO_3$ [kg/l],
as well as porosity and molten carbonate filling degree of each component.

OUTPUT DATA

Stack cell voltage[V] and maps on each cell plane of:

solid temperature [K],
anodic and cathodic gas temperature[K],
current density [mA/$cm^2$]
anodic and cathodic limiting current density [mA/$cm^2$],
total electrical resistance [$\Omega$*$cm^2$],
ohmic resistance [$\Omega$*$cm^2$],
polarization losses [$\Omega$*$cm^2$],
concentration polarization losses [$\Omega$*$cm^2$],
thermodynamic voltage [V],
molar fractions of each component of the gas mixture at anodic side and cathodic side,
molar flow rates of each component of the gas mixture at anodic side and cathodic side,
water gas shift reaction conversion rate [$Nm^3$/h],
pressure drops at anodic side and cathodic side [mbar],
pressure difference between anodic side and cathodic side [mbar].

These results are calculated at the initial working point as well as at some intermediate transient states up to the new final steady state condition, when dynamic simulation is carried out.

PHASE III: PERFORMANCE OPTIMIZATION

The results obtained via the calculation code allow optimisation of the operating conditions and therefore of the performance of the stacks.
The method, which is based on using the code, is an instrument for predictive and design, diagnostic and checking applications.
In this phase, whether the method is applied in the design phase or predictive terms to optimise working conditions, it is appropriate to bear in mind the operating requirements needed for optimum working of the MCFC stacks concerned:

A. Maximum local temperature: 973 K, preferably 873 K
B. Minimum local tempetature: 823 K, preferably 853 K,
C. Maximum difference in pressure between the anodic and cathodic compartments: 20 mbar
D. Maximum pressure drop along the anodic and cathodic compartments: 20 mbar
E. Uniformity of working conditions along the vertical axis of the stack.
F. Minimum cell operating potential: 0.6 V
G. Maximum dT/dt: 50˚C/h
H. Maximum local J/Jlim: 0.9
I. Maximum fuel utilization factor ($H_2$+CO): 85%
J. Maximum utilization factor of the oxidant ($CO_2$): 56%

When in the following table, the use of the code indicates that the constraints are not respected, the method according to the invention point out the design and operational actions suggested to guarantee an optimal functioning of the system.

| NON-RESPECTED CONSTRAINT | ACTION | TYPE of ACTION |
|---|---|---|
| A | ↓ T inlet<br>↑ cathodic flow-rate | Modification of operating conditions |

(continued)

| NON-RESPECTED CONSTRAINT | ACTION | TYPE of ACTION |
|---|---|---|
| | ↓ current density | Modification of o.c. |
| | | Modification of o.c. |
| B | ↑ T inlet | Modification of o.c. |
| | ↓ cathodic flow-rate | Modification of o.c |
| C If Pc > Pa | ↑ operating P | Modification of o.c. |
| | ↓ cathodic flow-rate | Modification of o.c |
| | ↓ cathode length | Modification of geometric characteristics |
| D | ↓ flow rate | Modification of o.c. |
| | ↑ channel hydraulic diameter | Modification of g.c. |
| | ↓ channel length | |
| | ↑ number of stacked cells | Modification of g.c. |
| | ↑ operating P | Design |
| | | Modification of o.c. |
| E | Redefinition of thermal dissipation | Design |
| F | ↓ Current density | Modification of o.c. |
| | Low V alarm | Control |
| G | Modification of the variations in input settings | Modification of o.c. Control |
| H | ↓ current density | Modification of o.c. |
| | ↑ anodic flow rate | Control |
| | ↓ number of stacked cells | Design |
| I | ↓ current density | Modification of o.c. |
| | ↑ anodic flow rate | Control |
| | ↓ number or stacked cells | Design |
| J | ↓ current density | Modification of o.c. |
| | ↑ $CO_2$ flow rate | Control |
| | ↓ number of stacked cells | Design |

If the method is being used for a diagnostic application, comparison of the simulation results will be made with the experimental ones, in case of disagreement the following considerations may be taken into account:

| Variable that does not agree | Hypothesis |
|---|---|
| Temperature $T_{sim} > T_{exp}$ | Leakage Thermal dissipation |
| Temperature $T_{sim} < T_{exp}$ | Crossover |
| Potential $V_{sim} > V_{exp}$ | Feed gas composition different from the set-up Internal electrical dissipations Kinetics affected by secondary phenomena Crossover |
| Pressure losses along the stacked cell $DP_{exp} > DP_{sim}$ | Channel obstruction |
| Temperature distribution on a cell or along the vertical axis of the stacked cells | Non-uniform gas distribution Crossover |

(continued)

| Variable that does not agree | Hypothesis |
|---|---|
| | Partial inhibition of the water shift reaction |

In conclusion, for the application of the method as a control instrument use of dynamic simulation allows the system's response times to corrective action to be forecast and therefore the time to restore safe working conditions.

EXAMPLE OF PREDICTIVE, DIAGNOSTIC AND DESIGN APPLICATION

The calculation method described here can be advantageously used in a method that manages the working conditions of a MCFC stack, when its characteristics are known, optimising its functioning.

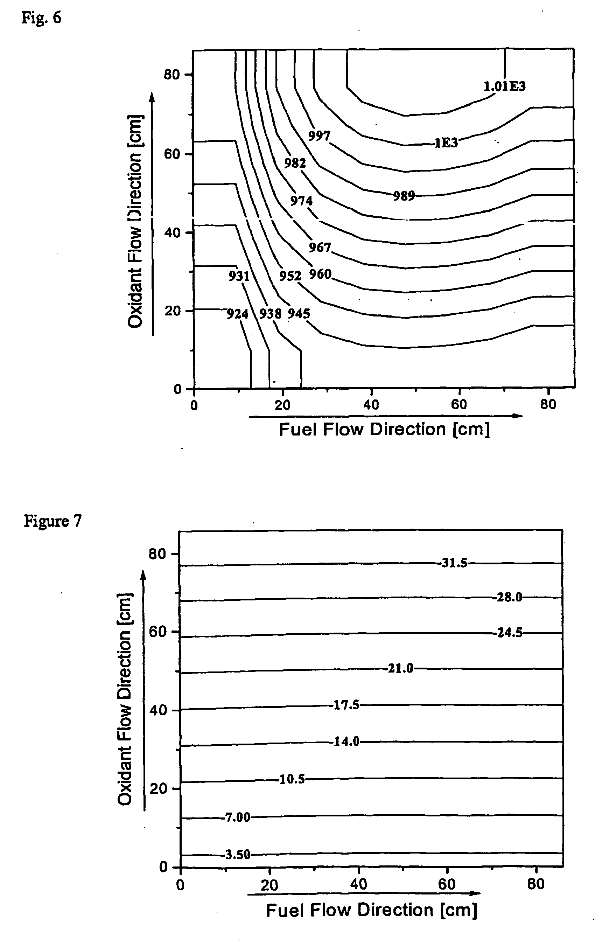

A stack of square planar cells of 0.75 $m^2$ fed with crossed flow with reformed natural gas attains excessively high local temperature values and pressure drops when the current density is greater than 1350 A/$m^2$. The setting up of these phenomena brings about a sharp reduction in performance and in power supplied, in that the cell material is damaged. By means of the simulation according to the invention the design and working parameters can be acted upon and the above-mentioned phenomena avoided by checking the temperature profiles and the values for the pressure drops to be calculated. For example, figures 6 and 7 show the maps calculated for the temperature and the pressure drop of the cathodic gas at a reference current density of 1500 A/$m^2$ and at the working pressure of 3.5 Atm (fuel: 57.1% H2, 27% CO2, 14.3% N2, 1.6% H2O, total flow-rate 16.18 Nm3/h; oxidant: 7.2% CO2, 59.2% N2, 10% 02, 23.6% H2O, total flow-rate 243.14 Nm3/h). The simulation succeeds in calculating that the maximum temperature in the cell has reached 1018 K, when the maximum acceptable value is 973 K, and establishing that the maximum drop in flow-rate of the cathodic gas, 35 mbar, and the maximum difference in pressure to which the matrix is subjected, 34.9 mbar, are well above the maximum acceptable values of 20 mbar. The system reacts in the particular case by reducing the temperature of the gas entering the cell to the minimum permitted value of 853 K, then increasing the total flow-rate at the cathode, so that the air cools the stack itself. Nevertheless, it should be noted that this last operation is not feasible for the limit imposed on the maximum drop in flow-rate allowed on the cathodic side. Advantageously the system reacts by changing the geometry of the cell from square to rectangular shape with the side crossed by the cathodic gas shorter than the anodic side.

The system and the method according to the invention conduct and resolve a parametric analysis that identifies, the total area of the cell being the same, the appropriate length of the cathodic side to reduce the pressure drop and to avoid the formation of areas of overheating inside single cells.

The 20 mbar limit value for the pressure drop of the cathodic gas has been reached for lengths crossed by the cathodic gas of 67 cm. The system then reacts by reducing the cathodic side and increasing the anodic side so as to keep the temperature values and the pressure drop within the range that ensures maximum power supplied.

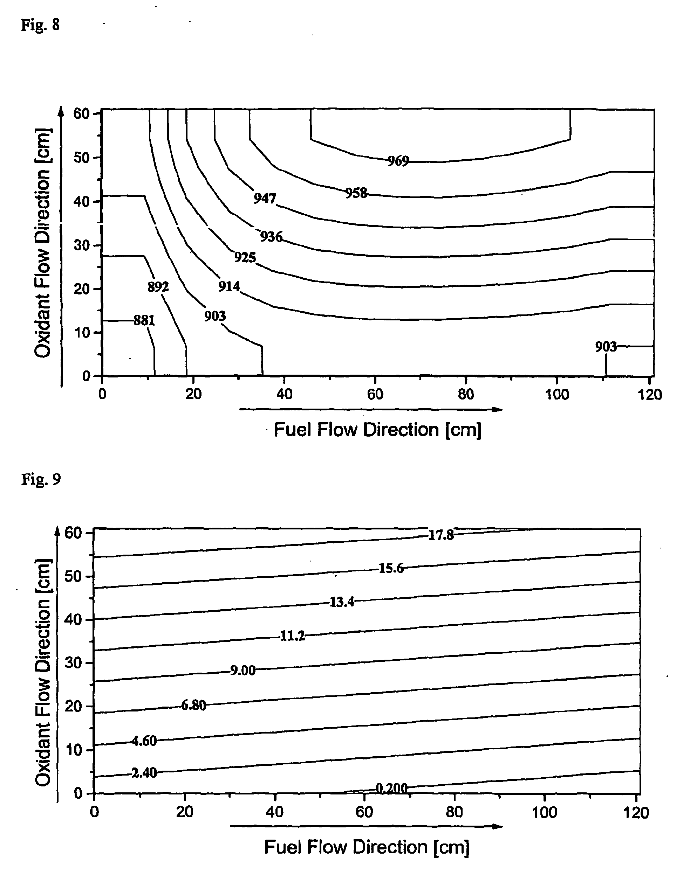

The method for controlling operating conditions using the simulation provided by the invention allows the designer to appreciate that the change in geometry, although it does not in itself affect the cell temperature, has allowed a reduction in temperature by providing for an increase of 20% in cathodic feed. The system provided by the invention calculates the maps of temperature and differences of pressure to which the matrix of the single cells presented in figures 8 and 9 are subjected. The temperature spots with higher values, around 973 K, as also the maximum difference of pressure between anode and cathode, 18 mbar, and the loss of load at the cathode, 20 mbar, provide equality of power supplied within the operating limits.

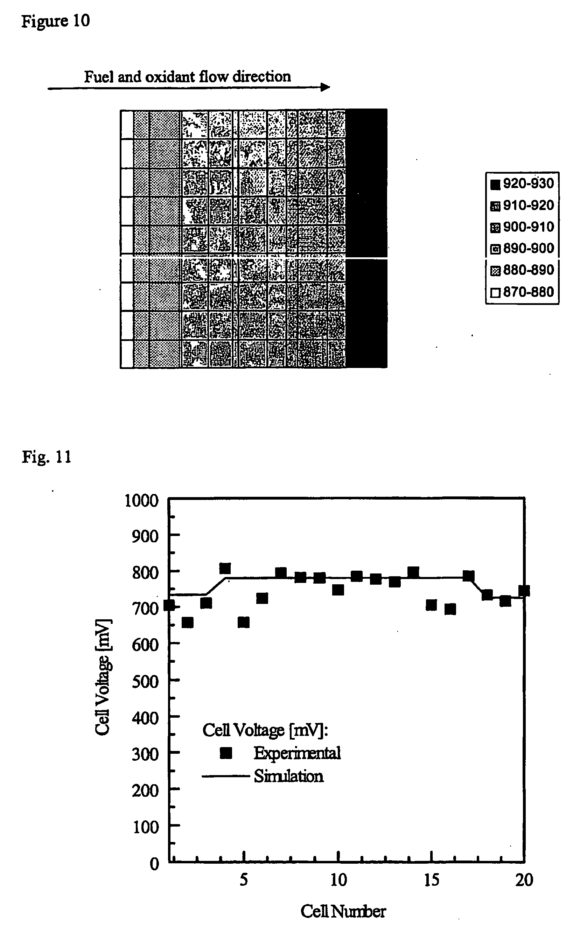

During the design of a fuel cell it can be useful to evaluate different geometries of inlet gas flow in order to optimize the temperature distribution and pressure losses inside a cell unit. The code MCFC-D3S$^©$ according to the invention allows checking the effective functioning conditions for system working at co-flow, cross-flow or counter-flow. For example Figure 10 shows the results of a stacked fuel cell of 15 square cells of 0.75 $m^2$ surface fed with co-flow solution at a current density of 1350 A/$m^2$ and at a pressure of 3.5 atm, fuel flow-rate in Nm$^3$/h: 4.45 $CO_2$, 14.69 $H_2$, 4.97 $H_2O$, 40.04 $N_2$, oxidant flow-rate in Nm$^3$/h: 26.33 $CO_2$, 5.26 $H_2O$, 141.71 $N_2$, 33.75 $O_2$.

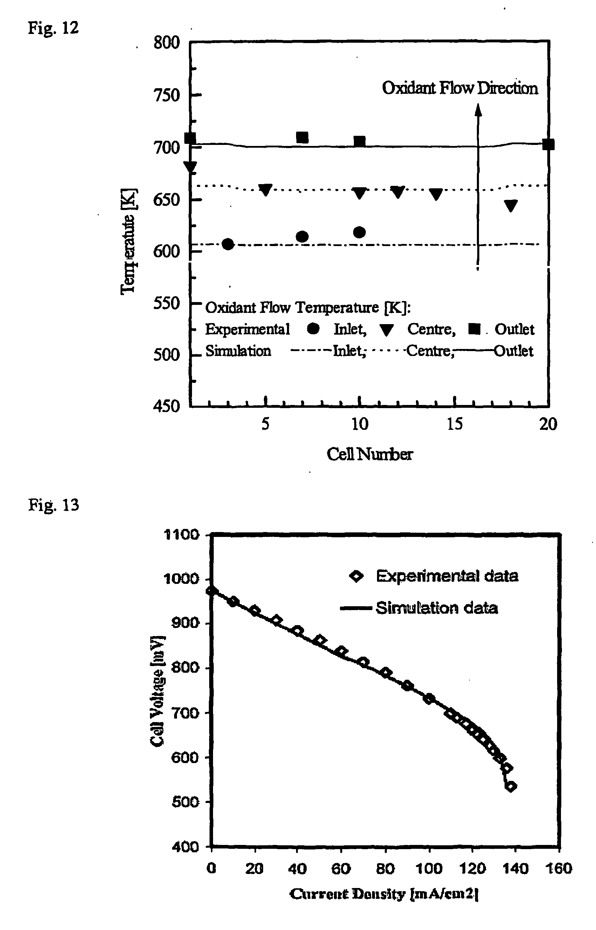

By assuring controlled pressure drops between anode and cathode avoids the occuring of detrimantal phenomenon of cross-over. The reacting gas cross-over causes chemical combustion of the reagents through direct contact occurring simultaneously to the electro-chemical oxidisation, which implies significant negative thermal effects for the good working of the stack and lower yields. The simulation model according to the invention is able to calculate for each cell the temperature mapping of the solid and establish whether we are in the presence of the said phenomenon. Figures 11 and 12 show the experimental and calculated values according to the simulation model of the invention for cell potential and temperatures for a stack of 15 square cells of 0.75 $m^2$ surface operating with cross-flow where cross-over is present. The reference operating conditions are: operating pressure 3.5 atm, current density 132 mA/cm$^2$, anodic flow-rate in Nl/h: 0.32 $CO_2$, 1.02 $H_2$, 0.75 $H_2O$, 2.92 $N_2$, cathodic flow-rate in Nl/h: 2 $CO_2$, 10.37 $N_2$, 2.48 $O_2$. Thanks

to the concordance between experimental and simulated values, only obtainable supposing the presence of cross-over, it's possible to analyze the staked cell behavior and evaluate the cross-over proportional to the difference in pressure between anode and cathode according to factor $6 \cdot 10^{-6}$ mol / s m$^2$ Pa.

The method using the simulation confirms that both in the presence and in the absence of cross-over the maximum temperature is in the part of the cell where the gases exit nevertheless in the absence of *cross-over* a thermic jump is registered between the cell entrance and exit of about 77 K with an average temperature of about 908 K, while, in the presence of cross-over, there is an average cell temperature of about 932 K with a temperature gradient of no less than 90 K / cell length.

At the same time the simulation method used in the invention allows one to measure the maps of local electrical resistance.

As the temperature increasing due to cross-over is the reason for a lower electrical resistance, the first effect is an higher cell potential, in fact potentials of 0.87 V have been calculated as against 0.8 V in the absence of cross-over. The apparent performance improvement, higher potential and therefore greater power supplied, reduces the overall energy performance of transforming chemical energy into electrical energy, as chemical rather than electro-chemical combustion of the reagents penalises electrical efficiency. The simulation method applied to the process control of an MCFC stack allows the critical operating sizes of the stack to be estimated and the flow-rates, temperatures and operating pressures to be modified, so as to allow advantageous operation of the stack under the best chemical and electrical performance conditions.

The invention allows current distribution to be determined at cell level, knowledge of which becomes particularly important if high fuel usage values are being worked with, and therefore in conditions of limiting diffusion phenomena and possibly close to the limiting current value.

FIGURE 13 shows the good level of agreement between experimental and simulated data relating to a characteristic curve taken up to the maximum current obtainable at atmospheric pressure, 650°C and the following feed on each cell expressed in mol/s * $10^5$: anode 1.4 $CO_2$, 2.3 $H_2O$, 16.6 $N_2$, 5.7$H_2$, cathode: 14.3 $CO_2$, 125 $N_2$, 15.1 $O_2$

In particular, the working of the cell has been studied at potential of 523 mV, i.e. in the last linear section of the characteristic curve, where the normal working conditions are apparently safe with respect to diffusion phenomena.

Figures 20 and 21 show the maps of the ratio between the local current density J and the limiting current density $J_{r,lim}$ with respect to the reagent $H_2$ for the anode and $C_2$ for the cathode.

From analysis of the maps obtained with the code it can be observed that part of the cell works under limiting operating conditions ($J/J_{r,lim} \to 1$). On the plane of the cell it is possible to identify both an anodic diffusion control near the fuel exit point and a cathodic one in the place where the fuel is fresh and the oxidant exhausted. The position of these regions depends precisely on the local concentrations of the reagents and on the current density map, parameters that are assessable using MCFC-D3S$^©$.

Moreover, it is interesting to observe how the limiting operating conditions can also be reached when the polarisation concentration values (another parameter that can be assessed via the code) are significantly lower than the cell potential. For example in the case under discussion the maximum local polarisation value at cell level is only 1/5 of the cell potential, but it implies current density close to the limiting value.

Knowledge of the $J/J_{r,lim}$ maps is very important for choosing safe working conditions for the whole cell, standard working points may in fact conceal significant diffusion phenomena that penalise performance.

This aspect is of particular importance when cells are stacked and form part of a plant whose re-circulation systems impose feed of much diluted flow-rates.

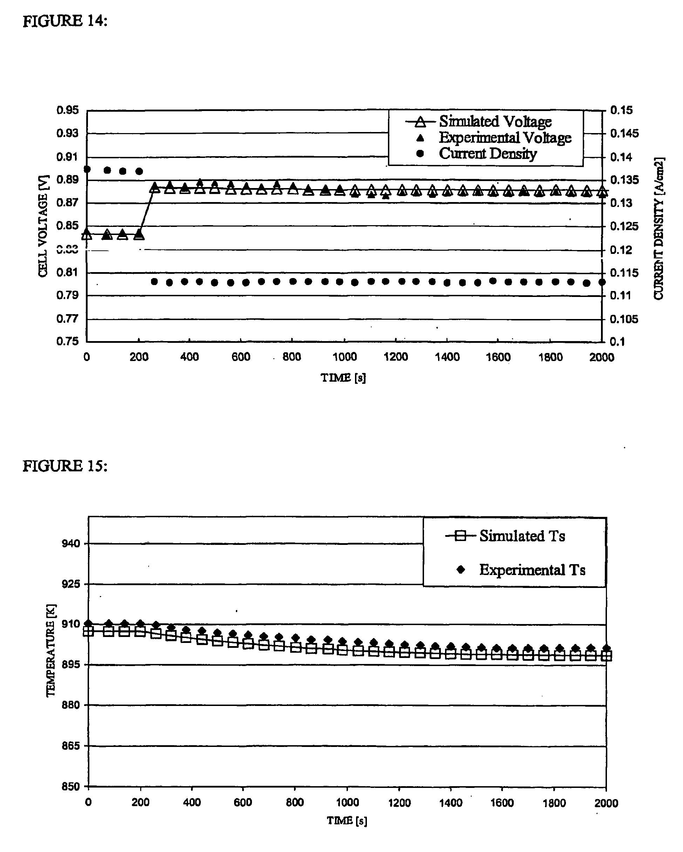

An example of use of the invention for checking the functioning of the cell in real time during the transients is shown in figures 14 and 15, where the electrical and thermal values are reported for sudden change of the load. The comparison between experimental data and calculated values according to the invention confirms the reliability of the method according to the invention during transient functioning. The figures 14 and 15 show, as result of a decrease of the current density of about 240 A/m$^2$, an instant increase of electrical potential of about 40 mV and a slower variation of temperature for both experimental and simulated data. In particular, the difference between measured and calculated values is lower of 4 degrees in terms of average temperature, as shown, while similar agreement is also obtained for local values either on the cell surface or each stack cell.

**List of symbols**

**Symbols used on eqq. (6), (7), (8), (9), (10)**

F =          Faraday's constant [C / mol]
J =          current density [A / m$^2$]

$n_i$ =         gas flow rate per length unit for the specie "i" [mol /m s]
$n_e$ =         electrons transferred in reactions (1), (2)
p =         pressure [Pa]
$q_{cross-over}$ =         cross-over flow rate [mol / s]
r =         reaction rate [mol / $m^2$ s]
T =         temperature [ K ]
x, y =         cell co-ordinates [m]
$\alpha$ =         cross-over parameter
$\nu$ =         stoichiometric coefficient

**Symbols used on eqq. (11), (12), (13), (14), (15), (16), (17), (18)**

T =         temperature [ K ]
$T_{top}$ =         temperature of the stack element above the cell under calculation [K]
$T_{bot}$ =         temperature of the stack element below the cell under calculation [K]
$T_{sol}$ =         temperature of the solid [K]
S =         specific gas/solid interface area ratio
s =         cell component thickness [m]
$Cp_i$ =         specific heat [J / mol K],
h =         heat transfer coefficient gas-solid [W / $m^2$ K],
$\lambda$ =         porous component thermal conductivity [W /m K],
Q =         thermal power density [W/$m^2$]
$\Delta H$ =         enthalpy variation [J / mole],
r =         reaction ratio [moli /s],
scel =         thickness porous elements [m]
kcel =         conductivity of the cell porous elements [W / m K]
spiat =         thickness by-polar plate [m]
kacc =         steel thermal conductivity [W / m K]
kcoll =         current collector thermal conductivity [W / m K]
hcoll =         thickness gas distributors / current collettors [m]
scoll =         steel thickness distributors/collectors [m]
ncan =         number of passageways per length unit [$m^{-1}$]
send =         end plate thickness [m]
smar =         thickness marinite plates [m]
kmar =         marinite thermal conductivity [W / m K]
$\rho$ =         cell density [mol/$m^3$]

**Symbols used on eq. (19)**

d =     passageways heigth [m]
K =     cell geometry, materials and flow regime coefficient
P =     pressure [Pa]
x =     passageways coordinate
v =     gas velocity [m/s]
$\mu$ =     gas viscosity [Pa s]

**Symbols used on eq. (20)**

E =         Nernst potential [V]
F =         Faraday constant [C $mol^{-1}$]
$J_{r,lim}$ =         limiting current density for the reactant r [A/$m^2$] = $nFK_{cr}x_r$
$K_{cr}$ =         transport coefficient for the reactant r (see at phase I)

# EP 1 834 371 B1

n = electrons transferred in reactions (1), (2)
R = local resistance [$\Omega$ m$^2$]
$R_g$ = gas costant [J mol$^{-1}$ K$^{-1}$]
T = temperature [ K ]
$X_r$ = local molar fraction of reactant r
V = cell potential [V]
$\eta_{conc}$ = concentration overvoltage [V]

INDEX

a = anode

c = cathode

i = chemical species

j = reaction number

n = component

iR = internal resistance

## Claims

1. A method of operating a molten carbonate fuel cell stack, comprising sampling the temperatures and pressures of the reactants at the inlet and at the outlet, sampling the current density and voltage, sampling the flow rate and gas composition of the inlet and outlet gases, analyzing the sampled temperature, current density, voltage, flow rates and gas composition, and regulating the inlet flow rates of the anodic and/or cathodic gas, **characterized in that** said analyzing step comprises:

   a. subdividing each cell of the fuel cell stack into sub cells;
   b. determining the initialization solid temperature and the error allowed in solid temperature convergence;
   c. calculating the local temperature mapping in each cell of the fuel cells stack by determining for each sub-cell of a fuel cell a first temperature; repeating the routine of calculating the temperature if the difference between the calculated and initialization temperature is above the error allowed in solid temperature convergence, by first setting the initialization temperature equal to the calculated temperature;
   d. determining a temperature threshold value within the temperature operating range
   e. comparing the temperature mapping with the threshold value of temperature to determine the proper dosage of anodic and cathodic gases; and

   regulating the inlet flow rates of the anodic and/or cathodic gas such that in each element of a cell of the stack the pressure drop between inlet and outlet is below 20 mbar and the temperature is within the operating range.

2. The method according claim 2 wherein the step of regulating the inlet flow of the anodic or cathodic gas maintains the local temperature in each cell of the slack between 923 and 973 K.

3. The method according claims 1-2 wherein the input temperatures of the anodic or cathodic gas are regulated between 823 and 973 K, preferably 853 and 873 K.

4. The method according claims 1-3 wherein said analyzing step before the cell solid temperature convergence further comprises:

   • determining a threshold value of the limiting current density and of the cell voltage,
   • calculating the current density mapping in each element of the a cell of the stack and the cell's average current density,

• comparing the produced data with a previously determined threshold value of limiting current density to determine the proper utilisation factor, and
• regulating the average current density in order to keep the cell voltage above the threshold value.

5. The method according claims 1-4 wherein said analysing step further comprises:

• calculating the current density mapping in each element of the a cell of the stack and the cell's average current density
• comparing the produced data with a previously determined threshold value of limiting current density to determine the proper utilisation factor, and
• regulating the average current density in order to keep the maximum temperature below the threshold value.

6. The method according claims 1-5 wherein the cell potential is above 0.6V.

7. The method according claims 1-6 wherein said analizing step further comprises:

• calculating the current density mapping in each element of the a cell of the stack,
• comparing the produced data with a previously determined threshold value of current density, and
• regulating the cell geometry of the anodic and cathodic electrode to maintain the current density below the threshold value.

8. A computer-readable medium encoded with a computer code for directing a computer processor to provide data from a molten carbonate fuel cell stack, wherein each fuel cell of the stack comprises a porous anode, a carbonate-comprising matrix and a porous cathode, wherein the anode section is supplied with a hydrogenous gas and the cathode section is supplied with a gaseous mixture compiling oxygen and carbon dioxide, the fuel cell is operated at a temperature in a range of 823-973 K, with the carbonate of the carbonate-comprising matrix being in a fluid state, oxygen and carbon dioxide are reacted at the cathode, yielding carbonate ions which move from the cathode to the anode generating an electric voltage between the anode and the cathode and an electrical current circulating in the external circuit, and water that has been formed is led away from the fuel cell together with carbon dioxide, comprising the temperatures and pressures of the reactants at the inlet and at the outlet, the current density and voltage, the flow rate and gas composition of the inlet and outlet gases, analyzing the sampled temperature, current density, voltage, flow rates and gas composition, to a computer operator system, said program code comprising:

• subdividing each cell of the fuel cell stack into sub cells;
• determining the initialization solid temperature and the error allowed in solid temperature convergence;
• calculating the local temperature mapping in each cell of the fuel cells stack by determining for each sub-cell of a fuel cell a first temperature; repeating the routine of calculating the temperature if the difference between the calculated and initialization temperature is above the error allowed in solid temperature convergence, by first setting the initialization temperature equal to the calculated temperature;
• determining a temperature threshold value within the temperature operating range
• comparing the temperature mapping with the threshold value of temperature to determine the proper dosage of anodic and cathodic gases; and
• calculating the input value for regulating the inlet flow rates of the anodic and/or cathodic gas such that in each element of a cell of the stack the pressure drop between inlet and outlet is below 20 mbar and the temperature is within the operating range.

9. The computer-readable medium according claim 8 wherein in said program code before the cell solid temperature convergence analysis further comprises:

voltage, determining a threshold value of the limiting current density and of the cell voltage,
• calculating the local current density mapping in each element of the a cell of the stack and the cell's average current density,
• comparing the produced data with a previously determined threshold value of limiting current density to determine the proper utilisation factor, and
• regulating the average current density in order to keep the cell voltage above the threshold value.

10. The computer-readable medium according claims 8-9 wherein said program code further comprises:

• calculating the current density mapping in each element of the a cell of the stack and the cell's average current density
• comparing the produced data with a previously determined threshold value of limiting current density to determine the proper utilisation factor, and
• regulating the average current density in order to keep the maximum temperature below the threshold value.

**11.** The computer-readable medium according claims 8-10 wherein said program code further comprises:

• calculating the current density mapping in each element of the a cell of the stack,
• comparing the produced data with a previously determined threshold value of current density, and
• regulating the cell geometry of the anodic and cathodic electrode to maintain the current density below the threshold value.

**Patentansprüche**

**1.** Verfahren zum Betreiben eines Schmelzkarbonatbrennstoffzellenstapels, umfassend das Abfragen der Temperaturen und der Drücke der Reaktanten an dem Einlass und dem Auslass, das Abfragen der Stromdichte und der Spannung, das Abfragen der Flussrate und der Gaszusammensetzung der Gase an dem Einlass und dem Auslass, das Analysieren der abgefragten Temperatur, der Stromdichte, der Spannung, der Flussraten und der Gaszusammensetzung, und das Einstellen der Flussraten des anodischen und/oder kathodischen Gases an dem Einlass, **dadurch gekennzeichnet, dass** der Analyseschritt umfasst:

a. Unterteilen jeder Zelle des Brennstoffzellenstapels in Unterzellen;
b. Bestimmen der Initialisierungs-Festkörpertemperatur und des bei der Festkörpertemperaturkonvergenz zulässigen Fehlers;
c. Berechnen der lokalen Temperaturabbildung in jeder Zelle des Brennstoffzellenstapels durch Bestimmen einer ersten Temperatur für jede Unterzelle einer Brennstoffzelle; Wiederholen der Routine zur Berechnung der Temperatur, falls die Differenz zwischen der berechneten Temperatur und der Initialisierungstemperatur oberhalb des bei der Festkörpertemperaturkonvergenz zulässigen Fehlers liegt, indem zunächst die Initialisierungstemperatur so eingestellt wird, dass sie gleich der berechneten Temperatur ist;
d. Bestimmen eines Temperaturschwellenwerts innerhalb des Temperaturbetriebsbereichs;
e. Vergleichen der Temperaturabbildung mit dem Schwellenwert der Temperatur, um die passende Dosierung von anodischem und kathodischem Gas zu bestimmen; und

Steuern der Flussraten des anodischen und/oder kathodischen Gases an dem Einlass derart, dass in jedem Element einer Zelle des Stapels der Druckabfall zwischen dem Einlass und dem Auslass kleiner als 20 mbar und die Temperatur innerhalb des Betriebsbereichs ist.

**2.** Verfahren nach Anspruch 1, bei dem der Schritt des Einstellens des Flusses des anodischen oder kathodischen Gases an dem Einlass die lokale Temperatur in jeder Zelle des Stapels zwischen 923 und 973 K hält.

**3.** Verfahren nach den Ansprüchen 1-2, bei dem die Temperaturen des anodischen oder kathodischen Gases an dem Einlass so eingestellt werden, dass sie zwischen 823 und 973 K, vorzugsweise 853 und 873 K liegen.

**4.** Verfahren nach den Ansprüchen 1-3, bei dem der Analyseschritt vor der Festkörpertemperaturkonvergenz der Zelle des Weiteren umfasst:

• Bestimmen eines Schwellenwerts der Grenzstromdichte und der Zellspannung,
• Berechnen der Stromdichteabbildung in jedem Element einer Zelle des Stapels und die durchschnittliche Zellstromdichte,
• Vergleichen der erzeugten Daten mit einem zuvor bestimmten Schwellenwert der Grenzstromdichte, um den passenden Nutzungsgrad zu bestimmen, und
• Einstellen der durchschnittlichen Stromdichte, um die Zellspannung oberhalb des Schwellenwerts zu halten.

**5.** Verfahren nach den Ansprüchen 1-4, bei dem der Analyseschritt des Weiteren umfasst:

• Berechnen der Stromdichteabbildung in jedem Element einer Zelle des Stapels und der durchschnittlichen Zellstromdichte,
• Vergleichen der erzeugten Daten mit einem zuvor bestimmten Schwellenwert der Grenzstromdichte, um den passenden Nutzungsgrad zu bestimmen, und
• Einstellen der durchschnittlichen Stromdichte, um die Maximaltemperatur unterhalb des Schwellenwerts zu halten.

6. Verfahren nach den Ansprüchen 1-5, bei dem das Zellpotential oberhalb 0,6 V liegt.

7. Verfahren nach den Ansprüchen 1-6, bei dem der Analyseschritt des Weiteren umfasst:

• Berechnen der Stromdichteabbildung in jedem Element einer Zelle des Stapels,
• Vergleichen der erzeugten Daten mit einem zuvor bestimmten Schwellenwert der Stromdichte, und
• Einstellen der Zellgeometrie der anodischen und der kathodischen Elektrode, um die Stromdichte unterhalb des Schwellenwerts zu halten.

8. Computerlesbares Medium, das mit einem Computercode codiert ist zum Anweisen eines Computerprozessors, um Daten eines Schmelzkarbonatbrennstoffzellenstapels einem Computerbetriebssystem bereitzustellen, wobei jede Brennstoffzelle des Stapels eine poröse Anode, eine Karbonat enthaltende Matrix und eine poröse Kathode aufweist, und wobei der Anodenbereich mit einem Wasserstoffgas und der Kathodenbereich mit einem gasförmigen Gemisch, das Sauerstoff und Kohlenstoffdioxid enthält, versorgt wird, und wobei die Brennstoffzelle bei einer Temperatur in einem Bereich von 823 bis 973 K betrieben wird, und wobei das Karbonat der Karbonat enthaltenden Matrix sich in einem flüssigen Zustand befindet, und wobei Sauerstoff und Kohlenstoffdioxid an der Kathode reagieren, wodurch Karbonationen austreten, die sich von der Kathode zu der Anode bewegen und eine elektrische Spannung zwischen der Anode und der Kathode und einen elektrischen Strom, der in dem externen Kreis zirkuliert, erzeugen, und wobei Wasser, das gebildet worden ist, zusammen mit dem Kohlenstoffdioxid von der Brennstoffzelle weggeführt wird, und wobei die Daten die Temperaturen und die Drücke der Reaktanten an dem Einlass und an dem Auslass, die Stromdichte und die Spannung, die Flussrate und die Gaszusammensetzung der Gase an dem Einlass und dem Auslass, das Analysieren der abgefragten Temperatur, der Stromdichte, der Spannung, der Flussraten und der Gaszusammensetzung umfassen, und wobei der Programmcode umfasst:

• Unterteilen jeder Zelle des Brennstoffzellenstapels in Unterzellen;
• Bestimmen der Initialisierungs-Festkörpertemperatur und des bei der Festkörpertemperaturkonvergenz zulässigen Fehlers;
• Berechnen der lokalen Temperaturabbildung in jeder Zelle des Brennstoffzellenstapels, indem für jede Unterzelle einer Brennstoffzelle eine erste Temperatur bestimmt wird; die Routine zur Berechnung der Temperatur, falls die Differenz zwischen der berechneten und Initialisierungstemperatur oberhalb des bei der Festkörpertemperaturkonvergenz zulässigen Fehlers liegt, wiederholt wird, indem die Initialisierungstemperatur zunächst so eingestellt wird, dass sie gleich der berechneten Temperatur ist;
• Bestimmen eines Temperaturschwellenwerts innerhalb des Temperaturbetriebsbereichs,
• Vergleichen der Temperaturabbildung mit dem Schwellenwert der Temperatur, um die passende Dosierung an anodischem und kathodischem Gas zu bestimmen; und
• Berechnen des Eingangswerts zum Einstellen der Flussraten des anodischen und/oder kathodischen Gases an dem Einlass derart, dass in jedem Element einer Zelle des Stapels der Druckabfall zwischen dem Einlass und dem Auslass kleiner als 20 mbar und die Temperatur innerhalb des Betriebsbereichs liegt.

9. Computer-lesbares Medium nach Anspruch 8, wobei der Programmcode vor der Festkörpertemperaturkonvergenzanalyse der Zelle des Weiteren umfasst:

• Bestimmen eines Schwellenwerts der Grenzstromdichte und der Zellspannung,
• Berechnen der lokalen Stromdichteabbildung in jedem Element einer Zelle des Stapels und der durchschnittlichen Zellstromdichte,
• Vergleichen der erzeugten Daten mit einem zuvor bestimmten Schwellenwert der Grenzstromdichte, um den passenden Nutzungsgrad zu bestimmen, und
• Einstellen der durchschnittlichen Stromdichte, um die Zellspannung oberhalb des Schwellenwerts zu halten.

10. Computer-lesbares Medium nach den Ansprüchen 8-9, wobei der Programmcode des Weiteren umfasst:

• Berechnen der Stromdichteabbildung in jedem Element einer Zelle des Stapels und der durchschnittlichen Zellstromdichte,
• Vergleichen der erzeugten Daten mit einem zuvor bestimmten Schwellenwert der Grenzstromdichte, um den passenden Nutzungsgrad zu bestimmen, und
• Einstellen der durchschnittlichen Stromdichte, um die Maximaltemperatur unterhalb des Schwellenwerts zu halten.

11. Computer-lesbares Medium nach den Ansprüchen 8-10, wobei der Programmcode des Weiteren umfasst:

• Berechnen der Stromdichteabbildung in jedem Element einer Zelle des Stapels,
• Vergleichen der erzeugten Daten mit einem zuvor bestimmten Schwellenwert der Stromdichte, und
• Einstellen der Zellgeometrie der anodischen und der kathodischen Elektrode, um die Stromdichte unterhalb des Schwellenwerts zu halten.

**Revendications**

1. Procédé pour faire fonctionner un bloc de piles à combustible à carbonate fondu, comprenant le fait d'échantillonner les températures et les pressions des réactifs au niveau de l'entrée et de la sortie, d'échantillonner la tension et la densité du courant, d'échantillonner le débit et la composition de gaz des gaz d'entrée et de sortie, d'analyser la température, densité de courant, tension, débits et composition de gaz échantillonnés, et de réguler les débits à l'entrée du gaz anodique et/ou cathodique, **caractérisé en ce que** ladite étape d'analyse comprend le fait de :

   a. subdiviser chaque pile du bloc de piles à combustibles en sous-piles ;
   b. déterminer la température d'initialisation des éléments solides et l'erreur admissible en termes de convergence de températures des éléments solides ;
   c. calculer le mappage de température locale dans chaque pile du bloc de piles à combustible en déterminant pour chaque sous-pile d'une pile à combustible une première température, répéter le sous-programme de calcul de la température si la différence entre la température calculée et la température d'initialisation est au-dessus de l'erreur admissible en termes de convergence de températures des éléments solides, en régulant d'abord la température d'initialisation égale à la température calculée ;
   d. déterminer une valeur seuil de température dans la plage de fonctionnement de température;
   e. comparer le mappage de température à la valeur seuil de température pour déterminer le dosage correct des gaz anodique et cathodique ; et

   réguler les débits d'entrée des gaz anodique et/ou cathodique de sorte que, dans chaque élément d'une pile du bloc, la chute de pression entre une entrée et une sortie soit en-dessous de 20 mbar et que la température se trouve dans la plage de fonctionnement.

2. Procédé selon la revendication 2, dans lequel l'étape de régulation du flux d'entrée du gaz anodique ou cathodique maintient la température locale dans chaque pile du bloc entre 923 et 973 K.

3. Procédé selon les revendications 1-2, dans lequel les températures d'entrée du gaz anodique ou cathodique sont régulées entre 823 et 973 K, de préférence 853 et 873 K.

4. Procédé selon les revendications 1-3, dans lequel ladite étape d'analyse avant la convergence des températures des éléments solides d'une pile comprend en plus le fait de :

   déterminer une valeur seuil de la densité de courant de limitation et de la tension de cellule,
   calculer le mappage de densité de courant dans chaque élément de la pile du bloc et la densité de courant moyenne de la pile,
   comparer les données produites à une valeur seuil précédemment déterminée de densité de courant de limitation afin de déterminer le facteur d'utilisation correct, et
   réguler la densité de courant moyenne afin de maintenir la tension de cellule au-dessus de la valeur seuil.

5. Procédé selon les revendications 1-4, dans lequel ladite étape d'analyse comprend en plus le fait de :

   calculer le mappage de densité de courant dans chaque élément de la pile du bloc et de la densité de courant moyenne de la pile

comparer les données produites à une valeur seuil précédemment déterminées de la densité de courant de limitation afin de déterminer le facteur d'utilisation correct, et

réguler la densité de courant moyenne afin de maintenir la température maximale en-dessous de la valeur seuil.

**6.** Procédé selon les revendications 1-5, dans lequel le potentiel de pile est au-dessus de 0,6 V.

**7.** Procédé selon les revendications 1-6, dans lequel ladite étape d'analyse comprend en plus le fait de :

calculer le mappage de densité de courant dans chaque élément de la pile du bloc,

comparer les données produites à une valeur seuil précédemment déterminée de densité de courant, et

réguler la géométrie de pile de l'électrode anodique et cathodique pour maintenir la densité de courant en-dessous de la valeur seuil.

**8.** Support lisible par ordinateur codé avec un code informatique pour amener un processeur informatique à fournir des données provenant d'un bloc de piles à combustible à carbonate fondu, où chaque pile à combustible du bloc comprend une anode poreuse, une matrice comprenant du carbonate et une cathode poreuse, où la section anodique est alimentée avec un gaz contenant de l'hydrogène et la section cathodique est alimentée avec un mélange gazeux comprenant de l'oxygène et du dioxyde de carbone, la pile à combustible fonctionne à une température dans une plage de 823-973 K, avec le carbonate de la matrice comprenant du carbonate se trouvant dans un état fluidique, l'oxygène et le dioxyde de carbone réagissant au niveau de la cathode, donnant des ions de carbonate qui se déplacent de la cathode vers l'anode générant une tension électrique entre l'anode et la cathode et un courant électrique circulant dans le circuit externe, et de l'eau qui a été formée est évacuée de la pile à combustible en même temps que le dioxyde de carbone, comprenant les températures et pressions des réactifs au niveau de l'entrée et de la sortie, la tension et la densité de courant, le débit et la composition de gaz des gaz d'entrée et de sortie, l'analyse de la température, densité de courant, tension, débits et composition de gaz échantillonnés, à un système d'exploitation d'un ordinateur, ledit code de programme comprenant le fait de :

sous-diviser chaque pile du bloc de piles à combustible en sous-piles ;

déterminer la température d'initialisation des éléments solides et l'erreur admissible en termes de convergence de températures des éléments solides ;

calculer le mappage de température locale dans chaque pile du bloc de piles à combustible en déterminant, pour chaque sous-pile d'une pile à combustible, une première température ; répéter le sous-programme de calcul de la température si la différence entre la température calculée et la température d'initialisation est au-dessus de l'erreur admissible en termes de convergence de températures des éléments solides, en réglant d'abord la température d'initialisation égale à la température calculée ;

déterminer une valeur seuil de température à l'intérieur de la plage de fonctionnement en température

comparer le mappage de température avec la valeur seuil de température pour déterminer le dosage correct des gaz anodique et cathodique ; et

calculer la valeur d'entrée pour réguler les débits d'entrée du gaz anodique et/ou cathodique de sorte que, dans chaque élément d'une pile du bloc, la chute de pression entre l'entrée et la sortie soit en-dessous de 20 mbar et que la température soit à l'intérieur de la plage de fonctionnement.

**9.** Support lisible par ordinateur selon la revendication 8, dans lequel, dans ledit code de programme avant l'analyse de convergence de températures des éléments solides de la pile comprend en plus le fait de :

déterminer une valeur seuil de la densité de courant de limitation et de la tension de cellule,

calculer le mappage de densité de courant local dans chaque élément de la pile du bloc et la densité de courant moyenne de la pile

comparer les données produites à une valeur seuil précédemment déterminée de la densité de courant de limitation afin de déterminer le facteur d'utilisation correct, et

réguler la densité de courant moyenne afin de maintenir la tension de cellule en-dessous de la valeur seuil.

**10.** Support lisible par ordinateur selon les revendications 8-9, dans lequel ledit code de programme comprend en plus le fait de :

calculer le mappage de densité de courant dans chaque élément de la pile du bloc et de la densité de courant moyen de la pile

comparer les données produites à une valeur seuil précédemment déterminée de densité de courant de limitation afin de déterminer le facteur d'utilisation correct, et

réguler la densité de courant moyenne afin de maintenir la température maximale en-dessous de la valeur seuil.

11. Support lisible par ordinateur selon les revendications 8-10, dans lequel ledit code de programme comprend en plus le fait de :

calculer le mappage de densité de courant dans chaque élément de la pile du bloc,

comparer les données produites à une valeur seuil précédemment déterminée de la densité de courant, et

réguler la géométrie de pile de l'électrode anodique et cathodique afin de maintenir la densité de courant en-dessous de la valeur seuil.

Fig. 1. Scheme of a fuel cell.

Fig. 2

FIGURE 3

FIGURE 4

FIGURE 5

Fig. 6

Figure 7

Fig. 8

Fig. 9

Figure 10

Fuel and oxidant flow direction →

| | |
|---|---|
| ■ | 920-930 |
| ▦ | 910-920 |
| ▦ | 900-910 |
| ▣ | 890-900 |
| ▨ | 880-890 |
| □ | 870-880 |

Fig. 11

Fig. 12

Fig. 13

FIGURE 14:

FIGURE 15:

New hypothesis required

**PHASE I** : Experimental determination of model parameters
(specific tests or theoretical hypothesis)

**PHASE II**
calculation of the chemical, physical and electrical local characteristics (by means of the simulation tool MCFC-D3S©)

**PHASE III**
performance optimization

Use as diagnostic tool

comparison between expected and measured experimental data

Analysis of discrepancy

NO

OK

operation can proceed in accordance with expectations

Use as predictive tool

Use as design tool

Use for control system design

check operative constraints have been respected

NO

Optimization of operating conditions is required

Optimization of operating conditions and technological parameters is required

Optimization of operating conditions is required

OK

the system is working under proper operating conditions

transient operation analysis

Fig. 16

10/10

EP 1 834 371 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4810595 A
- WO 2003 A
- EP 12590 A
- EP 10589 A